# EUROPÄISCHE PATENTANMELDUNG

(11) **EP 0 679 826 A1**
(43) Veröffentlichungstag der Anmeldung: **02.11.1995**
(21) Anmeldenummer: 95106344.5
(22) Anmeldetag: 27.04.1995
(51) Int. Cl.: F16L 9/12, F16L 11/12

(54) **Extrudierte Mehrschicht-Polymer-Schlauch- oder Rohrleitung**

(30) Priorität: 28.04.1994 DE 4414955
(71) Anmelder: EMS-INVENTA AG, CH-8001 Zürich (CH)
(72) Erfinder: Flepp, Albert, Dipl.-Ing. HTL, CH-7013 Domat/Ems (CH)
(74) Vertreter: Müller-Boré & Partner Patentanwälte

(57) **Zusammenfassung**

Die Erfindung betrifft eine extrudierte Mehrschicht-Polymer-Schlauch- oder Rohrleitung mit mindestens einer Polyester-Barriereschicht und mindestens einer Polyamidschutzschicht, wobei sie haftvermittlerfrei ist und die Polyester-Innenschicht durch Corona-Behandlung soweit aktiviert worden ist, daß sie zu ihrer Nachbarschicht verträglich ist. Die Erfindung betrifft weiterhin ein Verfahren zur Herstellung einer Mehrschicht-Polymer-Schlauch- oder Rohrleitung mit mindestens einer Polyester-Barriereschicht, wobei das Verfahren die folgenden Schritte enthält:
- Extrusion der Innenschicht,
- Corona-Behandlung der Innenschicht,
- Extrusion der äußeren Schicht mit geeignetem Ummantelungswerkzeug, wobei für zusätzliche extrudierte Schichten gegebenenfalls vorgängig weitere Corona-Behandlungsschritte vorgenommen werden können.

## Beschreibung

Die Erfindung betrifft den in den Patentansprüchen angegebenen Gegenstand.

Seit längerer Zeit werden in Kraftfahrzeugen als Kraftstoffleitungen neben sogenannten Monorohren, die aus einer einzigen Schicht aus Polyamid 11 oder 12 extrudiert werden, auch Mehrschichtrohre aus Polymeren eingesetzt.

So sind aus den DE 35 10 395 C2, DE 38 27 092 C1 und EP 04 28 834 A2 Kraftstoffleitungen bekannt, bei denen Ethylen/Vinylalkohol-Copolymere als Barriereschichten vorgesehen sind.

Ethylen/Vinylalkohol-Copolymere mit den geforderten Barriereeigenschaften sind bekannt als außerordentlich brüchige Polymere mit nur sehr geringer Reißdehnung. Diese Polymere können daher auch nur in geringen Schichtdicken verwendet werden. Darüber hinaus sind diese Polymere bei der Verarbeitung im Extrusionsprozeß und im speziellen bei der Coextrusion mit thermoplastischen Polymeren bei Verarbeitungstemperaturen über 200°C nicht thermostabil. Bei diesen Temperaturen erfolgt eine Vernetzung des Polymeren, was zu Gelteilbildung führt. In Folien, für welche diese Ethylen/Vinylalkohol-Copolymere entwikkelt wurden, kann eine Gelteilbildung sofort erkannt werden und führt aus optischen und ästhetischen Gründen zur Aussonderung. Bei dickwandigen Rohren mit eingefärbten Polymeren sind Gelteile jedoch nicht sichtbar, aber qualitätsmindernd. Damit stellen sich außerordentlich hohe Anforderungen an die Qualitätssicherung.

In der DE 38 21 723 C1 wird als Lösung ein Dreischichtrohr vorgeschlagen mit einer rohrinnenseitigen, geschlossenen Beschichtung aus Polyolefin und äußeren Schutzschichten aus Polyamid. Aus Literatur und Permeationsmessungen ist bekannt, daß Polyolefine eine gute Barriere gegen Alkohole und Polyamide eine gute Barriere gegen Kohlenwasserstoffe bilden. Kraftstoffe für Kraftfahrzeuge sind aber häufig Gemische aus Kohlenwasserstoffen und Alkoholen.

DE 38 27 092 C1 schützt ein coextrudiertes Mehrschicht-Rohr aus Polymeren, das durch eine außen aufgebrachte Polyester-Schutzschicht thermisch kurzzeitig bis 180°C belastbar wird.

Die DE 42 14 383 C1 schützt eine gattungsgemäße mehrschichtige Schlauch- oder Rohrleitung mit einer Barriereschicht aus Polyester, für die wegen der ungenügenden Haftung speziell zu Polyamiden in den weiteren Schichten zusätzliche Haftvermittlerschichten zwingend erforderlich sind. Für die Extrusion solcher Haftvermittlerschichten sind zusätzliche Aufschmelz- oder Verarbeitungseinrichtungen erforderlich.

Aufgabe der Erfindung ist es deshalb, eine Schlauch- oder Rohrleitung der vorerwähnten Art zu schaffen, die eine für die heutigen Umweltschutz- und Sicherheitsbestimmungen ausreichend geringe Permeation zeigt, ohne die vorstehend geschilderten Nachteile aufzuweisen.

Diese Aufgabe wird durch eine Mehrschicht-Polymer-Schlauch-oder Rohrleitung mit Barrierewirkung gemäß den kennzeichnenden Merkmalen des Anspruchs 1 gelöst.

Sie wird speziell gelöst durch eine Mehrschicht-Polymer-Rohrleitung, die mindestens eine Barriereschicht aus einem oder mehreren der Polyester nach Anspruch 2 enthält.

Nach der DE 42 14 383 C1 hat sich gezeigt, daß Polyester ausgezeichnete Sperreigenschaften gegen Motorkraftstoffe besitzen. Diese Sperrwirkung ist sowohl gegen reine Kohlenwasserstoffe als auch Alkohol und zugleich gegen ihre Gemische, wobei der Alkoholanteil über einen weiten Konzentrationsbereich variieren kann, unerwartet hoch.

Als Polyester im erfindungsgemäßen Sinn kommen beispielsweise Polyethylenterephthalat (PET), Polybutylenterephthalat (PBT) oder Polyethylennaphthalat (PEN) in Frage. Neben der Terephthalsäure eignet sich auch die Isophthalsäure als polyesterbildender Baustein. Auch Blockpolyetherester mit Polyetherweichsegmenten können verwendet werden.

Dabei kann die tiefere Schlagzähigkeit von PET oder PBT, durch die ein unmodifiziertes PBT-Rohr beispielsweise den Kälteschlagtest nach SAE J 844 nicht besteht, in einem erfindungsgemäßen Mehrschichtrohr ausgeglichen werden, indem mindestens eine Barriereschicht auf Polyesterbasis mindestens eine Schutzschicht aus Polyamid zugeordnet ist.

Es wurde festgestellt, daß überraschenderweise die Verträglichkeit der innen liegenden Barriereschicht aus Polyester zu der weiter außen liegenden Schutzschicht aus anderen thermoplastischen Polymeren, speziell zu Polyamiden, durch eine Corona-Behandlung so stark verbessert wird, daß zusätzliche Haftvermittlerschichten überflüssig werden.

Diese erfindungsgemäß eingesetzte Corona-Behandlung, die an sich nur für die Vorbehandlung von Polyolefin-Filmen zum Bedrucken bekannt ist, ist eine steuerbare elektrische Oberflächen-Behandlung des Polymer-Rohres mittels Hochfrequenz-Spannung, bevorzugt bis zu 56 KV im Bereich bis zu 25 KHz. Sie wird in vorteilhafter Weise on-line durchgeführt und gestattet, die Oberfläche der behandelten Gegenstände soweit zu aktivieren, daß die Voraussetzungen für eine einwandfreie, dauerhafte und gleichmäßige Haftung gegeben sind. Die Corona-Behandlungsdauer beträgt 0,05 bis 1,0 sec., bevorzugt 0,1 bis 0,5 sec.

Die Schutzschichten der erfindungsgemäßen Schlauch- oder Rohrleitung bestehen bevorzugt aus Polyamid. Als Polyamide werden vorteilhaft Polykondensate aus aliphatischen Lactamen oder ω-Aminocarbonsäuren mit 4 bis 44 Kohlenstoffatomen oder solche aus aromatischen ω-Aminosäuren mit 6 bis 20 Kohlenstoffatomen eingesetzt.

In gleicher Weise geeignet sind Polykondensate aus mindestens einem Diamin und mindestens einer Dicarbonsäure mit jeweils 2 bis 44 Kohlenstoffatomen. Beispiele für solche Diamine sind Ethylendiamin, 1,4-Diaminobutan, 1,6-Diaminohexan, 1,10-Diaminodecan, 1,12-Diaminododecan, meta- und para-Xylylendiamin, Cyclohexyldimethylamin, Bis-(p-aminocyclohexy)-methan und seine Niedrigalkylderivate. Beispiele für Dicarbonsäuren sind Bernstein-, Glutar-, Adipin-, Pimelin-, Kork-, Azelain- und Sebazinsäure, Dodecandicarbonsäure, 1,6-Cyclohexandicarbonsäure, Terephthalsäure, Isophthalsäure und Naphthalindicarbonsäure. Dabei sind die Homo- und Copolyamide auf Basis PA6, PA11, PA12, PA66, PA12 12, PA10 12, PA6 12, PA6 9, PA6 T, PA6 I, PA12 T, PA12 I besonders bevorzugt. Die erfindungsgemäßen Polyamide können die üblichen Zusatzstoffe enthalten wie UV- und Hitzestabilisatoren, Kristallisationsbeschleuniger, Weichmacher, Flammschutzmittel, Gleitmittel, anorganische Füllstoffe und Additive, welche die elektrische Leitfähigkeit erhöhen.

Die erfindungsgemäßen Mehrschicht-Rohrleitungen zeichnen sich in vorteilhafter Weise aus durch
- die besonders gute Verarbeitbarkeit der Polyester und speziell des Polybutylenterephthalats zur Barriereschicht
- die gegenüber den zur Zeit üblichen Motor-Kraftstoffen besonders gute Sperrwirkung der Polyester und besonders des Polybutylenterephthalats, die den Ethylen-Vinylalkohol-Copolymeren überlegen ist, bei gleichzeitig geringeren Rohstoffkosten.

Speziell für alkoholhaltige Benzine werden deutlich niedrigere Permeationswerte gefunden als bei Mehrschichtrohren, welche als Barriereschicht Polyvinylalkohol enthalten. Die erfindungsgemäßen Leitungen sind chemisch beständig gegen die gängigen Treibstoffe, Motoröle, im Automobilbereich verwendete Säuren und gegen Streusalze, speziell Zinkchlorid.

Die erfindungsgemaßen Rohrleitungen widerstehen Oxidationsprozessen durch aggressive Kraftstoffe (sourgas) und sind beständig gegen erhöhte Temperatur und Bestrahlung. Auch bei tiefen Temperaturen besitzen sie eine gute Schlagzähigkeit, so daß der Schlagtest nach SAE J 844 bei -40°C bestanden wird.

Der erreichte Berstdruck entspricht ebenfalls der für Benzinleitungen gültigen Norm DIN 73378, welche eine Vergleichsspannung oder "hoop strength" von mindestens 20 N/mm² vorschreibt. Die Leitungen lassen sich durch Wärmeeinwirkung verformen, wodurch auch komplizierte geometrische Anordnungen leicht zugänglich sind.

Beispiele für Ausführungsvarianten mit Schichtaufbau von Innen nach Außen sind:
PET/PA11, PET/PA12,
PBT/PA11, PBT/PA12,
PBT/PA6, PBT/PA66
Bevorzugt sind 2 Schicht-Rohrleitungen mit einer Barriere-Innenschicht aus PBT mit 0,2 bis 0,7 mm Schichtdicke und einer Schutz-Außenschicht aus PA12 mit 0,2 bis 0,8 mm Schichtdicke.

Besonders vorteilhaft ist, daß die Barriereschicht ohne Komplikation in Herstellung und Gebrauch bis 2,0 mm Dicke ausgeführt sein kann. Von besonderem Vorteil ist jedoch grundsätzlich, daß die erfindungsgemäßen Schlauch- oder Rohrleitungen aufgrund der verbesserten Barrierewirkung mit dünneren Wandstärken und damit kostensparender hergestellt werden können, als die Leitungen nach dem zitierten Stand der Technik.

Es ist auch möglich, die Wandung der Schlauch- oder Rohrleitung mit einer Querprofilierung in Umfangsrichtung, z.B. Rippen oder spiralförmigen Wellungen zu versehen, die Schutzschichten antistatisch, schlagzäh oder mit Weichmachern oder anderen Additiven nach dem Stand der Technik zu modifizieren bzw. durch Zugabe von Glasfaser längenstabil zu machen.

Die Permeationsmessungen wurden mit einer dynamischen Meßanordnung bei 60°C und 4 bar Überdruck durchgeführt. Als Testbenzine für einzelne Polymer-Typen wurden die Kraftstoffe FAM A, nach DIN 51604 A, ein Gemisch aus 50 Gew.-% Toluol, 30 Gew.-% Isooctan, 15 Gew.-% Diisobutan und 5 Gew.-% Methanol, FAM A mit 35 Gew.-% Methanol bzw. Rein-Methanol eingesetzt. Als Testbenzine für Rohre gemäß den Beispielen wurden FAM B, nach DIN 51604 B, ein Gemisch aus 42,25% Toluol, 25,35% Isooctan, 12,68% Diisobutan, 4,23% Ethanol, 15% Methanol und 0,5% Wasser, sowie Haltermann-Normbenzin mit 35% Methanol benutzt. Ihre Resultate nach 24 Stunden in g/m² belegen eindrücklich die Überlegenheit von Polyester am Beispiel Polybutylenterephthalat (PBT).

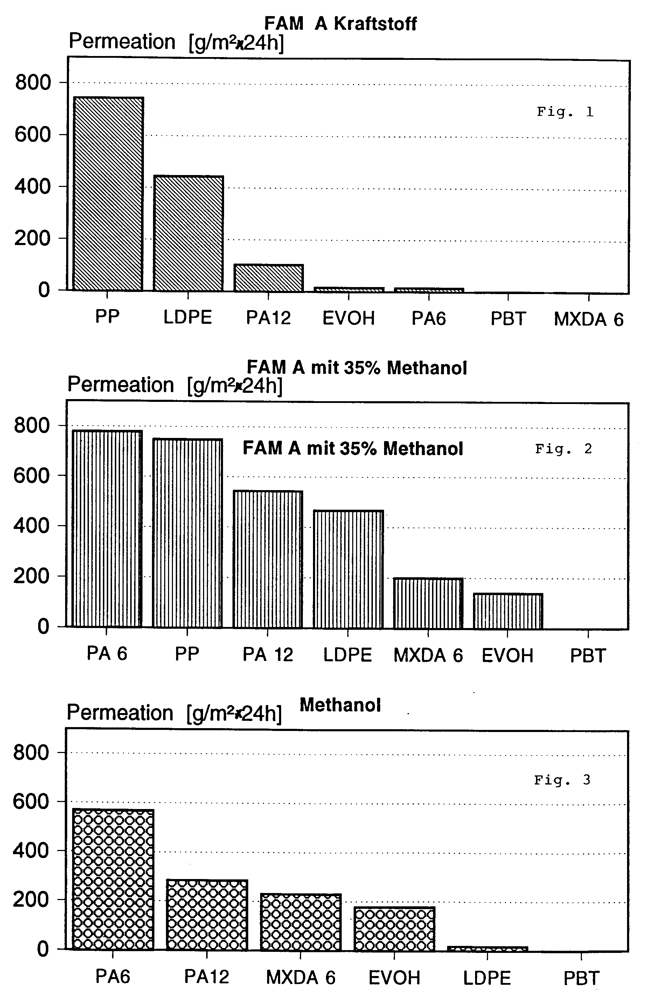

- Figur 1:: Permeationswerte von FAM A in verschiedenen Polymeren
- Figur 2:: Permeationswerte von FAM A und 35% Methanol in verschiedenen Polymeren
- Figur 3:: Permeationswerte von Methanol in verschiedenen Polymeren

### Beispiel1:

Innenschicht 0,6 mm PBT und Außenschicht 0,4 mm PA 12. Der Gesamtrohrdurchmesser beträgt 8 mm.

### Vergleichsbeispiel 1:

Monorohr aus PA12 8x1 mm.

### Vergleichsbeispiel 2: (DE 35 10 395)

5-Schichtrohr 8x1 mm Durchmesser (Schichten sind von innen nach außen angegeben):
0,45 mm PA 6,0,15 mm EVOH, 0,05 mm PA 6,0,05 mm PP, MSA-gepfropft, und 0,3 mm PA12.

Der Vergleich der Permeationswerte der erfindungsgemäßen Rohre mit solchen zur Zeit in Kraftfahrzeugen eingesetzten ist der nachfolgenden Tabelle I zu entnehmen.

**Tabelle I**

| | Permeation [g/m^{2.}h] FAM B | Permeation [g/m^{2.}h] Haltermann/35% Methanol |
|---|---|---|
| Beispiel 1 | 1,0 | 1,1 |
| Vergleichsbeispiel 1 | | 16,4 |
| Vergleichsbeispiel 2 | 5,1 | 6,2 |

Speziell vorteilhaft ist, daß die erfindungsgemäßen Rohrleitungen keine Haftvermittlerschicht benötigen und somit kostengünstig herzustellen sind. Die regelbare Corona-Behandlung gestattet, auch die einzustellende Haftung exakt zu regeln. Gleichzeitig ermöglicht die stufenweise Extrusion die direkte Kontrolle der Gleichmäßigkeit jeder einzelnen Schicht während der Produktion.

In besonderen Ausführungsformen kann die Rohrleitung aus weiteren funktionellen Schichten bestehen. Dabei muß Verträglichkeit zwischen benachbarten Schichten bestehen oder diese Verträglichkeit muß hergestellt sein, z.B. durch eine Corona-Behandlung der jeweils innenliegenden Schicht, vor dem Aufbringen der nächsten Schicht.

Die Erfindung betrifft auch ein Verfahren zur Herstellung einer Mehrschicht-Polymer-Rohrleitung, die mindestens eine PES Barriereschicht gemäß dem Anspruch 1 enthält, welches nach der Extrusion eines PES Rohres als Innenschicht eine Corona-Behandlung dieses Rohres vorsieht, welche in vorteilhafter Weise mit dem Aufbringen der äußeren Schicht "on-line" ausgeführt werden kann.

Weiter betrifft die Erfindung Mehrschicht-Polymer-Rohrleitungen, die nach dem obengenannten Verfahren herstellbar sind.

## Patentansprüche

1. Extrudierte Mehrschicht-Polymer-Schlauch- oder Rohrleitung mit mindestens einer Polyester-Barriereschicht und mindestens einer Polyamid-Schutzschicht, dadurch gekennzeichnet, daß sie haftvermittlerfrei ist und die Polyesterschicht als Innenschicht durch Corona-Behandlung soweit aktiviert worden ist, daß sie zu ihrer Nachbarschicht verträglich ist.

2. Mehrschicht-Polymer-Rohrleitung nach Anspruch 1, dadurch gekennzeichnet, daß der Polyester ausgewählt ist aus der Gruppe Polyethylenterephthalat, Polybutylenterephthalat, Polyethylennaphthalat, Polybutylennaphthalat.

3. Mehrschicht-Polymer-Rohrleitung nach Anspruch 1, dadurch gekennzeichnet, daß das Polyamid ausgewählt ist aus der Gruppe PA6, PA11, PA12, PA 66, PA12 12, PA10 12, PA6 12, PA6 9, PA6 T, PA6 I, PA12 T, PA12 I, deren Copolyamide und deren Gemische.

4. Mehrschicht-Polymer-Rohrleitung nach einem der Ansprüche 1 bis 3, dadurch gekennzeichnet, daß sie aus mindestens einer weiteren funktionellen Schicht besteht, die zu ihren Nachbarschichten verträglich ist oder deren Verträglichkeit hergestellt wurde.

5. Mehrschicht-Polymer-Rohrleitung nach einem der Ansprüche 1 bis 4, dadurch gekennzeichnet, daß sie zumindest auf einem Teilstück eine Querprofilierung oder spiralförmige Wellungen der Innenschicht oder aller Schichten aufweist.

6. Verfahren zur Herstellung einer Mehrschicht-Polymer-Schlauch- oder Rohrleitung mit mindestens einer Polyester-Barriereschicht, nach einem der Ansprüche 1 bis 5, dadurch gekennzeichnet, daß es die folgenden Schritte enthält:
- Extrusion der Innenschicht,
- Corona-Behandlung der Innenschicht,
- Extrusion der äußeren Schicht mit geeignetem Ummantelungswerkzeug,
wobei für zusätzliche extrudierte Schichten gegebenenfalls vorgängig weitere Corona-Behandlungsschritte vorgenommen werden können.

7. Verfahren nach Anspruch 6, dadurch gekennzeichnet, daß die Verfahrensschritte on-line erfolgen.

8. Mehrschicht-Polymer-Rohrleitung mit Barrierewirkung, herstellbar nach dem Verfahren gemäß einem der Ansprüche 6 bis 7.
